# EUROPEAN PATENT SPECIFICATION

(11) **EP 0 656 442 B1**
(45) Date of publication and mention of the grant of the patent: **11.08.1999**
(21) Application number: 94308556.3
(22) Date of filing: 21.11.1994
(51) Int. Cl.: D21H 27/10, D21H 19/20

(54) **Packaging material**
Verpackungsmaterial
Matériau d'emballage

(30) Priority: 03.12.1993 GB 9324873
(43) Date of publication of application: 07.06.1995
(73) Proprietor: BRITISH SISALKRAFT LIMITED, Strood, Kent ME2 4ED (GB)
(72) Inventor: Waight, Stephen, Maidstone, Kent (GB); Hills, Keith G. H., Strood, Kent ME2 2UD (GB)
(74) Representative: Wilkinson, Stephen John

(56) References cited:
- DE-A- 4 211 510
- FR-A- 2 207 966
- DATABASE WPI Section Ch, Week 9249 Derwent Publications Ltd., London, GB; Class A81, AN 92-401435 & JP-A-04 255 778 (SEKISUI CHEM IND CO LTD) , 10 September 1992

## Description

This invention relates to packaging material and, in particular, to paper-based packaging material.

Packaging materials having adhesive-coated regions which render them self-sealing are, of course, well-known. Examples of such materials include self-sealing envelopes and self-sealing corrugated wrapping paper which may be used, for example, for packaging books or magazines. The adhesives which are used in such materials are generally rubber-based and have the useful property that when applied to the material they form a secure bond with other adhesive-coated areas of the material but substantially no bond to other substrates. This property means that the adhesive coated region requires no protection and allows an article to be wrapped in a fully coated adhesive sheet of the packaging material without damage to the surface of the article.

The packaging materials of the type described above are, generally, paper-based and, as such, are recyclable. However, the adhesive which is present in the materials can cause problems when they are included in the raw material stream of a conventional waste-paper mill producing paper or board from mixed or unsorted waste. When the materials are repulped, the rubber-based (typically latex) coating is separated from the fibre as soft, elastic particles that readily pass through the screens (filters) used to separate the useful recovered fibre from the unwanted undispersed material. Passage of the elastic particles through the screens with the fibre can cause problems such as blocked paper machine wires, visual defects, sticky particles causing adhesion to the drying rollers (and hence tears, holes or web breaks), adhesion in the rewound paper and various problems in the final use of the paper or board. Such particles are known in the art as "stickies".

It is an object of the present invention to provide packaging material with an adhesive coating which reduces or eliminates the problems associated with "stickies" and which is, therefore, readily recyclable. This object has been attained by ensuring that the adhesive remains associated with relatively large particles in the repulped mixture and, therefore, that it is separable from the useful recyclable fibres in the recycling process.

FR-A-2207966 describes cohesive coating compositions for application to sheet materials, which comprise 51 to 99% of a natural or synthetic rubber, 1 to 49% of a polyalkyl methacrylate and 5 to 35% of an inert particulate material having a mean particle size in the range of 0.2 to 50 microns. The compositions improve the antiblocking properties of the coated sheet material and the anchorage of the coating to the sheet.

Accordingly, the present invention provides packaging material comprising a corrugated sheet of wet-strengthened paper, at least a part of said sheet being coated with a rubber-based adhesive, the adhesive coated paper forming an adhesive bond with itself but substantially no bond to other surfaces, wherein the adhesive comprises a polymer compatible with the rubber, the poymer being selected from (i) polymers and copolymers of styrene, butadiene, isoprene, alkyl acrylates, alkyl methacrylates and ethylene; (ii) polyolefins; and (iii) rosin esters, which secures the adhesive to the wet-strengthened paper such that on repulping, the adhesive remains secured to particles formed from the wet-strengthened paper in the repulped mixture which particles are larger than, and are separable from, useful recyclable fibres.

The packaging material of this invention may be in the form of adhesive-coated material such as a preformed envelope or package or sheet. The packaging material may also comprise a quantity of the fibrous recyclable substance such as paper. The term paper, as used herein, covers all interlaced fibrous products generally derived from cellulosic vegetable materials.

The type of wet-strengthened paper which may be used in the invention are well-known to those skilled in the art and are generally paper which has been parchmentised or which has been formed by treating paper stock with a suitable resin (e.g., urea or melamine formaldehyde) and curing the resin.

The rubber-based adhesive used in the present invention will typically be applied to the wet-strengthened paper as a water-based emulsion which, on drying, leaves a thin layer of adhesive. One or more layers of the same or different adhesives or mixtures of adhesives may be applied to the paper. For most applications, however, only one layer is applied. The term "rubber" as used herein covers natural rubber, chemically modified natural rubbers and synthetic rubbers. However, it is preferred that the rubber is natural rubber. The adhesive may contain conventional additives (e.g., stabilisers) and is generally applied to the wet-strengthened paper in the form of a latex dispersion.

The adhesive contains a substance which secures it to the wet-strengthened paper. The improved adhesion to the wet-strengthened paper means that the adhesive coating does not break up on repulping and will not pass through the screening process during recycling. Preferably, the adhesive remains adhered to particles having a minimum dimension greater than about 1 mm. The substance is a polymer compatible with the rubber having a molecular weight such that it adheres to the paper fibres and anchors the rubber to the paper matrix. The polymer is generally added as a water-based emulsion of suitable particle size to an aqueous dispersion of the rubber-based adhesive before the adhesive is applied to the wet-strengthened paper. The polymers are selected from polymers and copolymers of styrene, butadiene, isoprene, alkyl acrylates and methacrylates, ethylene and other polyolefins and rosin esters. The substance may comprise from 5 to 50% of the dry weight of the adhesive for reasons of cost and effectiveness.

The corrugated sheet used in the packaging material of the invention preferably has an adhesive coating on one side with the other side adhered to a backing substrate (e.g., of kraft paper). Commercially available starch-based adhesives may be used to adhere the wet-strengthened paper to the backing substrate.

The adhesive coating used in the invention is such that the adhesive-coated paper forms an adhesive bond with itself but forms substantially no bond with other surfaces. Such an adhesive is known in the art as a coldseal adhesive and an example of such a product is the sheet material sold by the applicant under the trade mark CUSHIONWRAP.

The invention will now be described with reference to the following example.

### EXAMPLE 1

A modified natural rubber latex, consisting of 65% of centrifuged and ammonia-stabilised natural rubber latex and 35% of a commercial styrene/butadiene copolymer emulsion (sold under the trade marks INTEX or EUROPRENE LA70 by Enichem Elastomers Limited, Southampton) was coated at 8 to 10 g/m² dry basis onto a 70 g/m² wet-strengthened kraft paper, dried and reeled up.

This coated sheet was corrugated on a single-face corrugating machine, B flute configuration, and laminated on the uncoated face to a 125 g/m² kraft liner using a commercial starch adhesive.

To demonstrate recyclability, the product was dispersed in a SPEA disintegrator at 2.5% consistency in distilled water at 23°C for 10 minutes. The stock was screened on a Sommerville screen with a 0.625 mm slotted screen plate. A portion of the accepts from this screening process were used to make a handsheet to be assessed for fibre quality. When the product was prepared as above, the handsheets contained no adhesive particles, and all the adhesive was removed at this first screening stage.

### EXAMPLE 2

Example 1 was repeated with the modified natural rubber latex replaced by the acrylic modified latex adhesive (sold under the trade mark INDATEX NL1075 by Industrial Adhesives Limited, Chesham, Buckinghamshire). As in Example 1, the product was shown to meet the requirements for recyclability with all the adhesive being removed at the first screening stage.

## Claims

1. Packaging material comprising a corrugated sheet of wet-strengthened paper, at least a part of said sheet being coated with a rubber-based adhesive, the adhesive-coated paper forming an adhesive bond with other adhesive-coated areas of the paper but substantially no bond to other substrates, wherein the adhesive comprises a polymer compatible with the rubber, the polymer being selected from (i) polymers and copolymers of styrene, butadiene, isoprene, alkyl acrylates, alkyl methacrylates and ethylene; (ii) polyolefins; and (iii) rosin esters, which secures the adhesive to the wet-strengthened paper such that on repulping the adhesive remains secured to particles formed from the wet-stengthened paper in the repulped mixture which particles are larger than, and are separable from, useful recyclable fibres.

2. Material as claimed in claim 1, wherein the rubber-based adhesive is applied to the paper as a latex.

3. Material as claimed in claim 1 or claim 2, wherein the adhesive is based on natural rubber.

4. Material as claimed in any one of claims 1 to 3, wherein the polymer is a styrene-butadiene copolymer, a polyacrylate or a polymethacrylate.

5. Material as claimed in any one of claims 1 to 4, wherein the substance comprises 5 to 50% by weight of the adhesive.

6. Material as claimed in any one of claims 1 to 5, wherein the sheet has an adhesive coating on one side and the other side is adhered to a backing substrate.

7. Material as claimed in claim 6, wherein the backing substrate is kraft paper.

## Patentansprüche

1. Verpackungsmaterial, umfassend einen gewellten Bogen naßfestes Papier, wobei wenigstens ein Teil des genannten Bogens mit einem Kautschuk-Klebstoff beschichtet ist, wobei das klebstoffbeschichtete Papier eine Klebbindung mit anderen klebstoffbeschichteten Bereichen des Papiers bildet, aber im wesentlichen keine Bindung mit anderen Substraten, wobei der Klebstoff ein mit dem Kautschuk kompatibles Polymer bildet, wobei das Polymer ausgewählt wird aus (i) Polymeren und Copolymeren von Styren, Butadien, Isopren, Alkylacrylaten, Alkylmethacrylaten und Ethylen; (ii) Polyolefinen; und (iii) und Kolophoniumestern, wodurch der Klebstoff so an dem naßfesten Papier befestigt wird, daß er beim Wiederaufschlämmen an Partikeln haften bleibt, die sich aus dem naßfesten Papier in dem wiederaufgeschlämmten Gemisch gebildet haben, wobei diese Partikel größer als nützliche recycelbare Fasern und von diesen trennbar sind.

2. Material nach Anspruch 1, bei dem der Kautschuk-Klebstoff als Latex auf das Papier aufgebracht wird.

3. Material nach Anspruch 1 oder Anspruch 2, bei dem der Klebstoff auf Naturkautschuk basiert.

4. Material nach einem der Ansprüche 1 bis 3, bei dem das Polymer ein Styren-Butadien-Copolymer, ein Polyacrylat oder ein Polymethacrylat ist.

5. Material nach einem der Ansprüche 1 bis 4, bei dem die Substanz 5 bis 50 Gew.-% des Klebstoffs umfaßt.

6. Material nach einem der Ansprüche 1 bis 5, bei dem der Bogen eine Klebstoffbeschichtung auf einer Seite aufweist und die andere Seite auf einem Stützsubstrat klebt.

7. Material nach Anspruch 6, bei dem das Stützsubstrat Kraftpapier ist.

## Revendications

1. Matériau d'emballage constitué d'une feuille ondulée de papier renforcé pour résister à l'humidité, au moins une partie de ladite feuille étant revêtue d'un adhésif à base de caoutchouc, le papier revêtu d'adhésif formant une liaison adhésive avec d'autres surfaces du papier revêtues d'adhésif mais sensiblement aucune liaison avec d'autres substrats, où l'adhésif comprend un polymère compatible avec le caoutchouc, le polymère étant choisi entre (i) des polymères et copolymères de styrène, butadiène, isoprène, acrylates alkyliques, méthacrylates alkyliques et éthylène; (ii) des polyoléfines ; et (iii) des colophanes estérifiées, qui fixe l'adhésif au papier renforcé pour résister à l'humidité de telle sorte que, lors de la retrituration, l'adhésif reste fixé aux particules formées du papier renforcé pour résister à l'humidité dans le mélange retrituré, lesdites particules étant plus grosses que les fibres recyclables utiles et pouvant en être séparées.

2. Matériau selon la revendication 1, dans lequel l'adhésif à base de caoutchouc est appliqué au papier sous forme de latex.

3. Matériau selon la revendication 1 ou la revendication 2, dans lequel l'adhésif est à base de caoutchouc naturel.

4. Matériau selon l'une quelconque des revendications 1 à 3, dans lequel le polymère est un copolymère de styrène-butadiène, un polyacrylate ou un polyméthacrylate.

5. Matériau selon l'une quelconque des revendications 1 à 4, dans lequel la substance comprend 5 à 50% en poids de l'adhésif.

6. Matériau selon l'une quelconque des revendications 1 à 5, dans lequel la feuille a un revêtement adhésif d'un côté et où l'autre côté est collé à un substrat de support.

7. Matériau selon la revendication 6, dans lequel le substrat de support est du papier kraft.
